# EUROPÄISCHE PATENTANMELDUNG

(11) **EP 4 101 953 A1**
(43) Veröffentlichungstag der Anmeldung: **14.12.2022**
(21) Anmeldenummer: 22164458.6
(22) Anmeldetag: 25.03.2022
(51) Int. Cl.: D01G 19/10, D01G 19/16, F16F 1/12

(54) **FEDERELEMENT FÜR EINE OBERZANGE EINER KÄMMMASCHINE**

(30) Priorität: 07.06.2021 CH 6612021
(71) Anmelder: Maschinenfabrik Rieter AG, 8406 Winterthur (CH)
(72) Erfinder: LINDINGER, Bodo, 78658 Zimmern (DE); STUTZ, Ueli, 8406 Winterthur (CH)

(57) **Zusammenfassung**

Die Erfindung betrifft ein Federelement (1) für eine Oberzange einer Kämmmaschine mit einer Längsachse (2) und mit einem ersten Element (3) mit einer quer zur Längsachse (2) angeordneten Durchgangsöffnung (4) zur Befestigung auf einer Achse und mit einem in der Längsachse (2) verlaufenden Bohrung (5); und mit einem zweiten Element (8) mit einem in der Längsachse (2) angeordneten Innengewinde (9) zur Befestigung eines Wellenadapters und mit einer in der Längsachse (2) angeordneten Führungsöffnung (10) mit einer Öffnungsweite (11) und mit einer auf einer dem Innengewinde (9) abgewandten Seite der Führungsöffnung (10) in der Längsachse (2) angeordneten Durchtrittsöffnung (12); und mit einer Druckfeder (15), wobei die Druckfeder (15) in der Längsachse (2) zwischen dem ersten Element (3) und dem zweiten Element (8) angeordnet ist; und mit einem Verbindungselement (17) wobei das Verbindungselement (17) in der Längsachse (2) in der Bohrung (5) des ersten Elements (3) ortsfest gehalten ist und durch die Durchtrittsöffnung (12) des zweiten Elements (8) in die Führungsöffnung (10) des zweiten Elements (8) ragend geführt ist und an der dem ersten Element (3) gegenüberliegenden Seite des zweiten Elements (8) einen grösseren Durchmesser (20) als die Durchtrittsöffnung (12) aufweist. Das erste Element (3) weist einen rohrförmigen Ansatz (6) auf, welcher in der Längsrichtung (2) teilweise über die Druckfeder (15) greifend angeordnet ist. Das zweite Element (8) weist eine über die Druckfeder (15) und den Ansatz (6) des ersten Elements (3) greifende Hülse (14) auf.

## Beschreibung

Die Erfindung betrifft ein Federelement für eine Oberzange einer Kämmmaschine mit einer zwischen zwei Elementen eingespannten Druckfeder.

Die Erfindung bezieht sich auf einen Zangenmechanismus an einer Kämmmaschine, dessen an Zangenarmen befindliche Unterzange mittels eines auf einer oszillierenden Antriebswelle festsitzenden Armes zusammen mit der Oberzange hin- und herbewegt wird, und dessen ebenfalls an entsprechenden Zangenarmen befindliche Oberzange schwenkbar auf der Unterzange gelagert ist, wobei die Schliessbewegung der Oberzange über eine an zwei Gelenkstellen beweglich gelagerte Federschwinge erteilt wird. Diese Federschwinge (oder Federelement) hat die Aufgabe nach dem Aufsetzen der Oberzange auf die Unterzange die Bewegung der Oberzange zusammen mit der Unterzange zu ermöglichen und durch die Federkraft des Federelementes gleichzeitig auch den zum Festhalten eines Faserbartes zwischen den Zangen erforderlichen Klemmdruck zu erzeugen. Die Federelemente halten das Zangenaggregat in der vorderen Endlage ausreichend geöffnet, in einem gewünschten Zeitpunkt, während sie in einer Rückbewegung in eine hintere Endlage das Zangenaggregat sanft schliessen und dann mit einer konstanten Kraft geschlossen halten.

Der Einsatz von gattungsgemässen Federelementen ist bereits aus der DE 42 16 485 A1 bekannt. Die Federelemente sind aus zwei Endelementen mit einer dazwischen liegenden Druckfeder aufgebaut. Die beiden Endelemente sind mit einem Verbindungsbolzen miteinander verbunden. Der Verbindungsbolzen dient einerseits einer Vorspannung der Druckfeder und andrerseits wird durch den Verbindungsbolzen eine stabile Längsachse des Federelementes bestimmt. Dazu ist der Verbindungsbolzen mit einem der Endelemente ortsfest verbunden und im zweiten Endelement in der Längsachse geführt. Dadurch können sich die Endelemente auf der Längsachse gegeneinander bewegen mit dem Widerstand der dazwischen eingespannten Druckfeder. Dabei wird bei jeder Bewegung das Endelement in einen Anschlag am Verbindungsbolzen verbracht. Durch das Auftreffen des Endelements in den Anschlag entstehen hohe Flächenpressungen, was sich nachteilig auf die Standzeit der betroffenen Bauteile auswirkt. Das Endelement, in welchem der Verbindungsbolzen hin und her gleitet ist aus Kunststoff gefertigt, um möglichst gute Gleiteigenschaften zu erreichen. Dies hat jedoch den Nachteil, dass bei hohen Taktraten auch ein hoher Verschleiss auftritt.

Dieser Nachteil wollte die CN 209 906 948 U beheben. Die CN 209 906 948 U zeigt ebenfalls ein Federelement zur Verwendung in einer Kämmmaschine. Dabei werden zwischen dem Verbindungsbolzen und den beiden Endelementen Lagerbuchsen eingesetzt, um bei einer Stauchung oder Entlastung des Federelements eine Verbesserung der Gleiteigenschaften bei gleichzeitiger Verwendung von metallischen Endelementen zu erreichen. Jedoch sind auch in der vorgeschlagenen Lösung keine Verbesserung der Belastungen der Kontaktfläche zwischen dem Verbindungsbolzen und dem Endelement erfolgt. Als Schutz vor Verschmutzung und damit rascherem Verschleiss ist ein Faltenbalg aus Metall oder Gummi vorgesehen, welcher die Druckfeder umgibt. Bei der heute üblichen hohen Zahl der Kämmspiele ist jedoch die Lebensdauer solcher Staubschutzelementen wie Faltenbalge stark eingeschränkt. Auch werden diese bei unsachgemässer Behandlung oftmals bereits vor deren Einsatz in der Maschine beschädigt. Weiter ist bei der gezeigten Ausführung nachteilig, dass die am Verbindungsbolzen auftretenden pulsierenden Kräfte durch den geringen Durchmesser des Bolzens eine rasche Materialermüdung nach sich ziehen.

Die Aufgabe der Erfindung ist es demnach ein Federelement zu schaffen, welches einen widerstandsfähigen Schutz vor Verschmutzungen bietet. Eine weitere Aufgabe der Erfindung ist es ein Federelement zu schaffen, welches eine verbesserte Verbindung der Endelemente durch den Verbindungsbolzen aufweist und dadurch den hohen Belastungen standhält.

Die Aufgabe wird gelöst durch eine Vorrichtung mit den Merkmalen des unabhängigen Anspruchs.

Zur Lösung der Aufgabe wird ein Federelement für eine Oberzange einer Kämmmaschine vorgeschlagen mit einer Längsachse und mit einem ersten Element mit einer quer zur Längsachse angeordneten Durchgangsöffnung zur Befestigung auf einer Achse und mit einem in der Längsachse verlaufenden Bohrung. Weiter umfasst das Federelement ein zweites Element mit einem in der Längsachse angeordneten Innengewinde zur Befestigung eines Wellenadapters und mit einer in der Längsachse angeordneten Führungsöffnung mit einer Öffnungsweite und mit einer auf einer dem Innengewinde abgewandten Seite der Führungsöffnung in der Längsachse angeordneten Durchtrittsöffnung. Weiter umfasst das Federelement eine Druckfeder, wobei die Druckfeder in der Längsachse zwischen dem ersten Element und dem zweiten Element angeordnet ist, und ein Verbindungselement, wobei das Verbindungselement in der Längsachse in der Bohrung des ersten Elements ortsfest gehalten ist und durch die Durchtrittsöffnung des zweiten Elements in die Führungsöffnung des zweiten Elements ragend geführt ist und an der dem ersten Element gegenüberliegenden Seite des zweiten Elements einen grösseren Durchmesser als die Durchtrittsöffnung aufweist. Die eingesetzte Druckfeder kann beispielsweise als Draht- oder Blech-Feder in zylindrischer oder konischer Bauart ausgebildet sein oder beispielsweise aus mehreren Federelementen zusammengesetzt sein. Auch können Druckfedern mit einer linearen oder progressiven Federkonstante oder Kombinationen davon zur Anwendung kommen. Das erste Element weist einen rohrförmigen Ansatz auf welcher in der Längsrichtung teilweise über die Druckfeder greifend angeordnet ist und das zweite Element weist eine über die Druckfeder und den Ansatz des ersten Elements greifende Hülse auf. Durch eine Überlappung von Ansatz des ersten Elements mit der Hülse des zweiten Elements wird eine Kapselung eines Innenraums des Federelementes erreicht. Dabei wird ein sich zwischen dem Ansatz und der Hülse in deren Überlappungsbereich sich bildender Ringspalt möglichst klein gehalten.

Vorteilhafterweise ist zwischen der Hülse und dem Ansatz eine Dichtung vorgesehen. Zwischen dem Ansatz und der Hülse kann ist zur weiteren Verbesserung der Kapselung eine Dichtung eingebracht, welche am Ansatz oder an der Hülse befestigt wird. Die Dichtung verhindert den Eintritt von Schmutz oder Staub in einen Innenraum der beiden Elemente. Dadurch wird ein rascher Verschleiss der mechanisch bewegten Teile zwischen den Elementen verhindert. Bevorzugterweise ist die Dichtung in einer Nut gehalten, wobei die Nut in der Hülse oder dem Ansatz vorgesehen ist. Durch ein Anbringen der Dichtung in einer dafür vorgesehenen Nut wird ein, durch die Bewegungen des Federelementes bedingtes, Verrutschen oder Herausarbeiten der Dichtung aus dem Ringspalt vermieden. Alternativ ist die Dichtung durch Kleben an der Hülse oder am Ansatz befestigt, wobei auch eine Sicherung der Dichtung in der Nut durch einen Kleber vorgenommen werden kann.

Bevorzugterweise ist die Dichtung aus Filz oder Gummi gefertigt. Derartige Dichtungen weisen gute Gleiteigenschaften auf und sind verschleissfest. Alternativ kann bei einer im Ansatz vorhandenen Nut auch eine Bürstendichtung in die Nut eingebracht werden.

In einer alternativen Ausführungsform kann der Ansatz und/oder die Hülse in ihrem Überlappungsbereich derart ausgebildet werden, dass sich eine Labyrinth-Dichtung ausbildet. Die Ausführung der Dichtung aus einem Ansatz und einer überlappenden Hülse sind durch ihre Bauform unabhängig voneinander bewegbar. Es besteht weder eine Berührung der beiden Bauteile noch werden der Ansatz oder die Hülse mechanisch beansprucht. Dies verhindert eine Ermüdung der Materialien wie auch einen Verschleiss.

Vorteilhafterweise entspricht die Öffnungsweite zumindest dem 1, 4-fachen eines Durchmessers der Durchtrittsöffnung. Dadurch wird eine entsprechend gross Ringfläche erreicht, welche am Übergang von der Durchtrittsöffnung zur Führungsöffnung ausgebildet wird. Bevorzugterweise ist die Öffnungsweite zumindest 1,5-fach grösser als der Durchmesser der Durchtrittsöffnung. Die grosse Ringfläche bewirkt eine Verringerung der Flächenpressung, wenn das Federelement entlastet beziehungsweise die beiden Elemente maximal auseinandergefahren werden. Durch die geringe Flächenpressung besteht auch die Möglichkeit das zweite Element aus Kunststoff zu fertigen. Eine Fertigung aus Kunststoff birgt Vorteile in Bezug auf das Gewicht des Federelements, was sich wiederum positiv auf die Dauerfestigkeit aufgrund der hohen Taktraten in der Bewegung des Federelementes.

Vorteilhafterweise weist die Bohrung im ersten Element ein Innengewinde auf und das Verbindungselement ist in das erste Element eingeschraubt, wobei zur Sicherung der Verschraubung ein Stift oder eine Sicherungsmutter oder eine Verklebung vorgesehen ist. Durch das Einschrauben des Verbindungselements in das erste Element wird auf einfache Weise eine ortsfeste Verbindung geschaffen und das Verbindungselement exakt in der Längsachse des Federelementes angeordnet.

Weiter ist es von Vorteil, wenn zur Führung des Verbindungselementes in der Führungsöffnung eine Führungshülse eingesetzt ist. Durch das Einsetzen der Führungshülse in das zweite Element kann eine für die Belastungen verbesserte Materialpaarung von Führungshülse und Verbindungselement erreicht werden. Die Materialpaarung ist zudem unabhängig von der Materialwahl des zweiten Elements selbst. Die Führungshülse kann beispielsweise aus einem Gleitwerkstoff wie Bronze oder Teflon bestehen.

Bevorzugterweise ist das Verbindungselement aus einem Verbindungsbolzen und einer am Verbindungsbolzen gehaltenen Führungsbüchse gebildet, wobei der Verbindungsbolzen an einem dem ersten Element zugewandten Ende ein Aussengewinde zur Verbindung mit dem ersten Element und an einem dem zweiten Element zugewandten Ende ein Verbindungsmittel zur Verbindung mit der Führungsbüchse aufweist. Der Verbindungsbolzen ist mit dem ersten Element verschraubt und wird damit in der Längsachse gehalten. Weiter greift der Führungsbolzen durch die Durchtrittsöffnung des zweiten Elements und ist mit der Führungsbüchse verbunden. Die Verbindung kann durch eine Verschraubung realisiert werden. Dabei ist ein Aussendurchmesser der Führungsbüchse grösser als die Durchtrittsöffnung, sodass beim Zusammenschrauben des Verbindungsbolzens mit der Führungsbüchse das erste Element und das zweite Element zusammengezogen werden, was zu einer Vorspannung der Druckfeder führt. Das Verbindungsmittel kann beispielsweise auch aus einem Bajonettverschluss oder einer andersartigen Kupplung bestehen. Wobei bei einer Ausführung mit einer Kupplung im Gegensatz zu einer Verschraubung nur eine durch die Länge des Verbindungsbolzens vorgegebene Einstellung der Druckfeder möglich ist.

In einer alternativen Ausführungsform ist das Verbindungselement bestehend aus dem Verbindungsbolzen und der Führungsbüchse einstückig ausgebildet ist. Dadurch wird ein Zusammenziehen der beiden Elemente bereits durch ein Einschrauben des Verbindungsmittels in das erste Element bewirkt. Der Vorteil ist hierbei, dass nur eine Schraubverbindung vorhanden ist und dadurch eine einfachere Montage sowie eine höhere Betriebssicherheit des Federelements resultiert.

Weiter ist es von Vorteil, wenn das Verbindungselement in der Längsachse durch den Verbindungsbolzen in der Führungsöffnung des ersten Elements und durch die Führungsbüchse in der Führungshülse des zweiten Elements geführt ist. Durch zwei in der Längsachse beabstandete Führungen wird eine Verbesserung der Lasten erreicht und eine mögliche Verkantung der linearen Führung des zweiten Elements auf dem Verbindungselement vermieden.

Vorteilhafterweise ist eine Höhe der Druckfeder derart auf die Länge des Verbindungselements abgestimmt, dass durch die Befestigung des Verbindungsbolzens im ersten Element und im zweiten Element eine Vorspannung der Druckfeder erreicht wird. Wird das Verbindungselement einstückig ausgeführt ist eine Länge des Verbindungselements vom Aussengewinde, welches in das erste Element geschraubt wird, bis zur Vergrösserung des Durchmessers nach der Durchtrittsöffnung durch das zweite Element nicht verstellbar. Entsprechend ist die Länge der Druckfeder auf das Verbindungsmittel abzustimmen, um eine Vorspannung der Druckfeder zu erreichen, wenn das Verbindungsmittel eingebaut ist.

Vorteilhafterweise ist die Öffnungsweite in einem Bereich der Führungsbüchse grösser als in einem Bereich der Durchtrittsöffnung des zweiten Elements. Durch die Querschnittsvergrösserung im Bereich der Führungsbüchse wird eine Verringerung der Belastung des Verbindungsbolzens erreicht, weil entsprechend eine grössere Führungshülse eingebaut werden kann. Die auf den Verbindungsbolzen wirkenden Querkräfte werden geringer, wodurch einem Bruch des Verbindungsbolzens durch Überlastung entgegengewirkt wird.

Weiter wird eine Kämmmaschine vorgeschlagen mit zumindest einem Federelement nach der vorangehenden Beschreibung.

Im Folgenden wird die Erfindung anhand von einer beispielhaften Ausführungsform erklärt und durch Zeichnungen näher erläutert. Es zeigen:
- Figur 1: eine schematische Darstellung einer ersten Ausführungsform in einem Längsschnitt;
- Figur 2: eine schematische Darstellung einer zweiten Ausführungsform in einem Längsschnitt und
- Figur 3: eine schematische Darstellung einer dritten Ausführungsform.

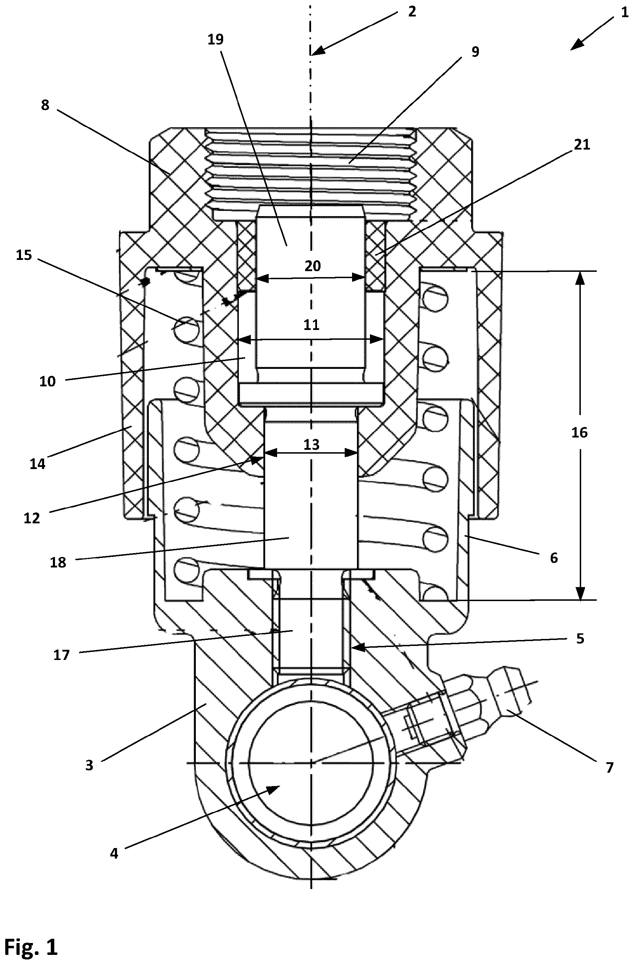

Figur 1 zeigt eine schematische Darstellung eines Federelements 1 in einem Längsschnitt in einer ersten Ausführungsform. Das Federelement 1 hat eine Längsachse 2 und weist ein erstes Element 3 und ein zweites Element 8 mit einer zwischen den beiden Elementen 3 und 8 gehaltenen Druckfeder 15 auf. Die beiden Elemente 3 und 8 sind in der Längsachse 2 durch ein Verbindungselement 17 miteinander verbunden. Das Verbindungselement 17 besteht aus einem Verbindungsbolzen 18 und einer Führungsbüchse 19, wobei der Verbindungsbolzen 18 und die Führungsbüchse 19 als ein einteiliges Verbindungselement 17 ausgeführt sind. Das erste Element 3 weist eine Durchgangsöffnung 4 auf, welche senkrecht zur Längsachse 2 angeordnet ist und zur Aufnahme einer Achse dient. Auf diese Durchgangsöffnung 4 gerichtet ist ein Schmiernippel 7 vorgesehen. Damit kann die Verbindung des ersten Elements 3 mit der Achse geschmiert werden. In der Längsachse 2 ist im ersten Element 3 eine Bohrung 5 vorgesehen, welche in der gezeigten Ausführung ein Innengewinde aufweist. Entsprechend ist der Verbindungsbolzen 18 mit einem Aussengewinde versehen, welches in das Innengewinde des ersten Elements 3 eingeschraubt ist. Weiter ist am ersten Element 3 ein rohrförmiger Ansatz 6 ausgebildet, welcher teilweise über die Druckfeder 15 greift.

Das zweite Element 8 ist auf einer dem ersten Element 3 abgewandten Seite in der Längsachse 2 mit einem Innengewinde 9 versehen. Dieses dient dazu einen Wellenadapter (nicht gezeigt) einzuschrauben. Ausgehend vom Innengewinde 9 in Richtung zum ersten Element 3 folgen in der Längsachse 2 eine Führungsöffnung 10 mit einer Öffnungsweite 11 und eine Durchtrittsöffnung 12 mit einem Durchmesser 13. Dabei ist die Öffnungsweite 11 grösser als der Durchmesser 13 der Durchtrittsöffnung 12. In die Führungsöffnung 10 eingebaut ist eine Führungshülse 21.

Das Verbindungselement 17 greift in der Längsachse 2 von der Führungshülse 21 über die Durchtrittsöffnung 12 des zweiten Elements 8 in das Innengewinde des ersten Elements 3. Dadurch, dass im Bereich der Führungsbüchse 19 der Durchmesser 20 des Verbindungselements 17 grösser ist als der Durchmesser 13 der Durchtrittsöffnung 12 wird beim Einsetzen des Verbindungselements 17 das zweite Element 8 gegen die Federkraft der Druckfeder 15 an das erste Element 3 herangezogen und entsprechend die Druckfeder 15 auf eine Höhe 16 vorgespannt. Das Verbindungselement 17 wird in der Bohrung 5 des ersten Elements 3 durch die Schraubverbindung ortsfest gehalten, wohingegen das zweite Element 8 bei einer Stauchung oder Entlastung der Druckfeder 15 auf dem Verbindungselement 17 in Richtung der Längsachse 2 hin und her gleiten kann. Dabei wird das Verbindungselement 17 im Bereich der Durchtrittsöffnung 12 auf dem Verbindungsbolzen 18 und im Bereich der Führungshülse 21 auf der Führungsbuchse 19 linear geführt.

Das zweite Element 8 weist zudem eine in Richtung zum ersten Element 3 ausgebildete Hülse 14 auf. Die Hülse 14 ist an das zweite Element 8 angeformt und umgreift einerseits die Druckfeder 15 und zumindest teilweise den Ansatz 6 des ersten Elements 3. Zwischen dem Ansatz 6 und der Hülse 14 verbleibt nur ein kleiner Ringspalt, sodass die Druckfeder 15 wie auch das Verbindungselement 17 vor Verschmutzungen geschützt sind. Eine Anordnung von Ansatz 6 und Hülse 14 ist dabei so gewählt, dass auch bei einer Veränderung der Höhe 16 bei einer Bewegung der Druckfeder 15 eine genügend lange Überlappung der Hülse 14 über den Ansatz 6 gegeben ist, um die Bauteile zu schützen.

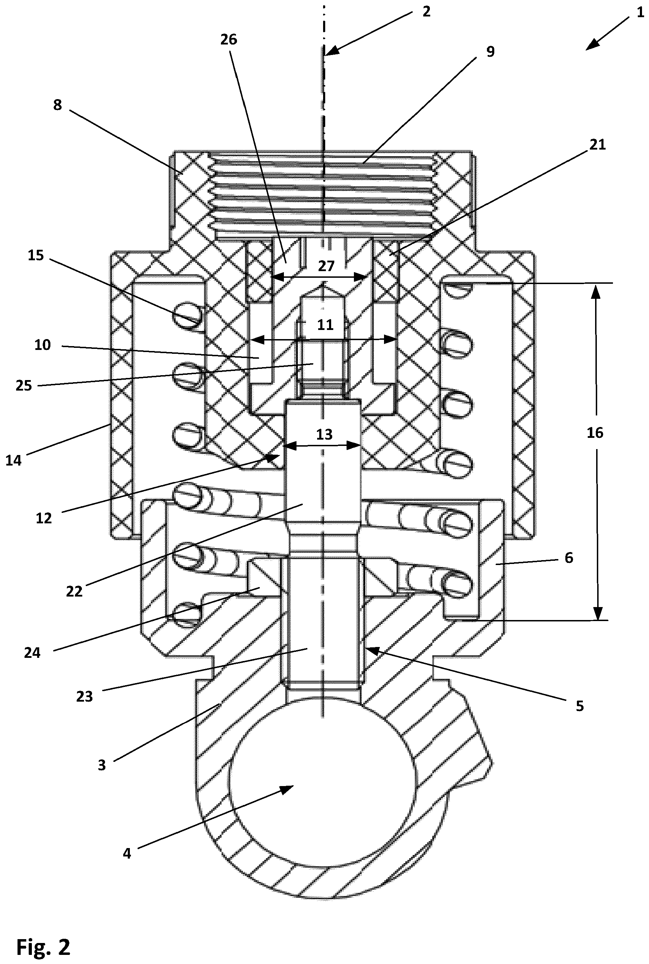

Figur 2 zeigt eine schematische Darstellung eines Federelements 1 in einem Längsschnitt in einer zweiten Ausführungsform. Das Federelement 1 hat eine Längsachse 2 und weist ein erstes Element 3 und ein zweites Element 8 mit einer zwischen den beiden Elementen 3 und 8 gehaltenen Druckfeder 15 auf. Die beiden Elemente 3 und 8 sind in der Längsachse 2 über einen Achsbolzen 23 miteinander verbunden. Der Achsbolzen 22 weist an einem dem ersten Element 3 zugewandten Ende einen ersten Gewindeabschnitt 23 auf, mit welchem der Achsbolzen 22 in eine ein Innengewinde aufweisende Bohrung 5 eingesetzt wird. Die Schraubverbindung zwischen dem Achsbolzen 22 und dem ersten Element 3 ist mit einer Sicherungsmutter 24 gesichert. Weiter weist der Achsbolzen 22 an einem dem zweiten Element 8 zugewandten Ende einen zweiten Gewindeabschnitt 25 auf, mit welchem der Achsbolzen 22 mit einem Führungselement 26 verbunden ist. Das Führungselement 26 in Verbindung mit dem Achsbolzen 22 sind in ihrer Funktion mit dem Verbindungselement 17 nach Figur 1 gleichzustellen. Das erste Element 3 weist eine Durchgangsöffnung 4 auf, welche senkrecht zur Längsachse 2 angeordnet ist und zur Aufnahme einer Achse dient. Im ersten Element 3 ist ein rohrförmiger Ansatz 6 ausgebildet, welcher teilweise über die Druckfeder 15 greift.

Das zweite Element 8 ist auf einer dem ersten Element 3 abgewandten Seite in der Längsachse 2 mit einem Innengewinde 9 versehen. Dieses dient dazu einen Wellenadapter (nicht gezeigt) einzuschrauben. Ausgehend vom Innengewinde 9 folgen in der Längsachse 2 in Richtung zum ersten Element 3 eine Führungsöffnung 10 mit einer Öffnungsweite 11 und eine Durchtrittsöffnung 12 mit einem Durchmesser 13. Dabei ist die Öffnungsweite 11 grösser als der Durchmesser 13 der Durchtrittsöffnung 12. Der Achsbolzen 22 greift durch die Durchtrittsöffnung 12 und das Führungselement 26 ist in der Führungsöffnung 10 angeordnet. Dabei ist ein Aussendurchmesser 27 des Führungselements 26 kleiner als der Durchmesser 11 der Führungsöffnung 10, sodass zwischen dem Führungselement 26 und dem zweiten Element 8 in der Führungsöffnung 10 eine Führungshülse 21 Platz findet.

Das Achsbolzen 22 greift in der Längsachse 2 vom Führungselement 26 über die Durchtrittsöffnung 12 des zweiten Elements 8 in das Innengewinde des ersten Elements 3. Dadurch, dass im Bereich der Führungsöffnung 10 der Durchmesser des Führungselements 26 grösser ist als der Durchmesser 13 der Durchtrittsöffnung 12 wird beim Zusammenschrauben des Achsbolzens 22 mit dem Führungselement 26 das zweite Element 8 gegen die Federkraft der Druckfeder 15 an das erste Element 3 herangezogen und entsprechend die Druckfeder 15 auf eine Höhe 16 vorgespannt. Der Achsbolzen 22 wird in der Bohrung 5 des ersten Elements 3 durch die Schraubverbindung ortsfest gehalten, wohingegen das zweite Element 8 bei einer Stauchung oder Entlastung der Druckfeder 15 auf dem Führungselement 26 in Richtung der Längsachse 2 hin und her gleiten kann. Dabei wird das zweite Element 8 im Bereich der Durchtrittsöffnung 12 auf dem Achsbolzen 22 und im Bereich des Führungselements 26 auf der Führungsbuchse 19 linear geführt.

Das zweite Element 8 weist zudem eine in Richtung zum ersten Element 3 ausgebildete Hülse 14 auf. Die Hülse 14 ist an das zweite Element 8 angeformt und umgreift einerseits die Druckfeder 15 und zumindest teilweise den Ansatz 6 des ersten Elements 3. Zwischen dem Ansatz 6 und der Hülse 14 verbleibt nur ein kleiner Ringspalt, sodass die Druckfeder 15 wie auch der Achsbolzen 22 vor Verschmutzungen geschützt sind. Eine Anordnung von Ansatz 6 und Hülse 14 ist dabei so gewählt, dass auch bei einer Veränderung der Höhe 16 bei einer Bewegung der Druckfeder 15 eine genügend lange Überlappung der Hülse 14 über den Ansatz 6 gegeben ist, um die Bauteile zu schützen.

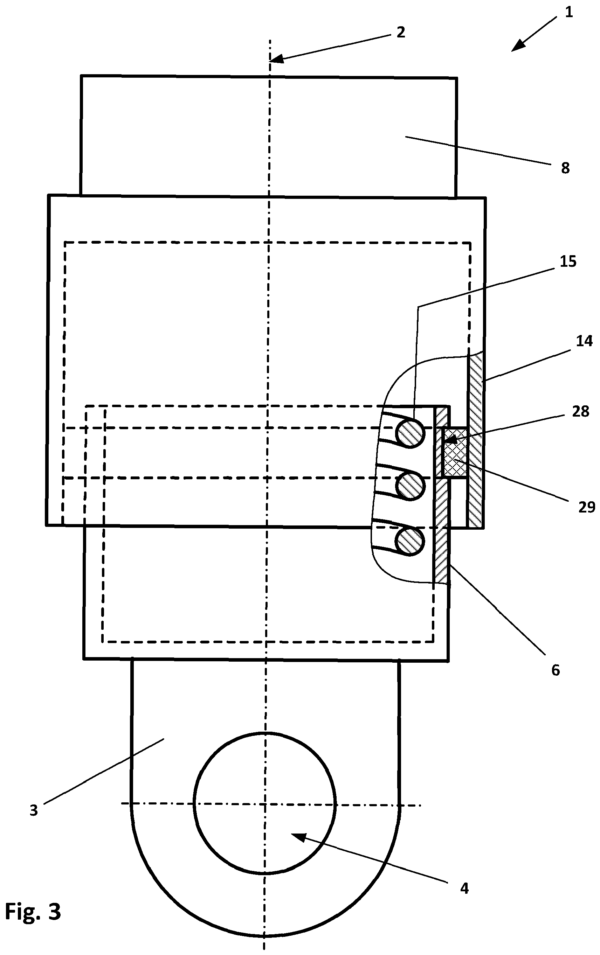

Figur 3 zeigt eine schematische Darstellung eines Federelements 1 in einer dritten Ausführungsform. Das Federelement 1 hat eine Längsachse 2 und weist ein erstes Element 3 und ein zweites Element 8 mit einer zwischen den beiden Elementen 3 und 8 gehaltenen Druckfeder 15 auf. Zur Verbindung der beiden Elemente 3 und 8 wird auf die Figuren 1 und 3 verwiesen. Das erste Element 3 weist einen in Richtung des zweiten Elements 8 ausgebildeten Ansatz 6 auf, welcher die Feder 15 teilweise umschliesst. Das zweite Element 8 weist zudem eine in Richtung zum ersten Element 3 ausgebildete Hülse 14 auf. Die Hülse 14 ist an das zweite Element 8 angeformt und umgreift einerseits die Druckfeder 15 und zumindest teilweise den Ansatz 6 des ersten Elements 3. Zwischen dem Ansatz 6 und der Hülse 14 verbleibt nur ein kleiner Ringspalt 30. In diesem Ringspalt 30 ist eine Dichtung 29 vorgesehen. Die Dichtung ist in einer beispielhaften Darstellung in einer Nut 29 gehalten, wobei die Nut 29 gegen den Ringspalt 30 gerichtet im Ansatz 6 des ersten Elements 3 ausgebildet ist. Durch die Nut 28 wird die Dichtung 29 in Position gehalten, sodass auch bei Bewegungen von Ansatz 6 und Hülse 14 gegeneinander ein die Feder 15 beinhaltender Innenraum vor Staub und Schmutz geschützt ist.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Legende

- 1: Federelement
- 2: Längsachse
- 3: Erstes Element
- 4: Durchgangsöffnung
- 5: Bohrung
- 6: Ansatz
- 7: Schmiernippel
- 8: Zweites Element
- 9: Innengewinde
- 10: Führungsöffnung
- 11: Öffnungsweite
- 12: Durchtrittsöffnung
- 13: Durchmesser Durchtrittsöffnung
- 14: Hülse
- 15: Druckfeder
- 16: Höhe der Druckfeder
- 17: Verbindungselement
- 18: Verbindungsbolzen
- 19: Führungsbüchse
- 20: Durchmesser Verbindungselement
- 21: Führungshülse
- 22: Achsbolzen
- 23: Erster Gewindeabschnitt
- 24: Sicherungsmutter
- 25: Zweiter Gewindeabschnitt
- 26: Führungselement
- 27: Durchmesser Führungselement
- 28: Nut
- 29: Dichtung

## Patentansprüche

1. Federelement (1) für eine Oberzange einer Kämmmaschine mit einer Längsachse (2) und mit
- einem ersten Element (3) mit einer quer zur Längsachse (2) angeordneten Durchgangsöffnung (4) zur Befestigung auf einer Achse und mit einem in der Längsachse (2) verlaufenden Bohrung (5);
- einem zweiten Element (8) mit einem in der Längsachse (2) angeordneten Innengewinde (9) zur Befestigung eines Wellenadapters und mit einer in der Längsachse (2) angeordneten Führungsöffnung (10) mit einer Öffnungsweite (11) und mit einer auf einer dem Innengewinde (9) abgewandten Seite der Führungsöffnung (10) in der Längsachse (2) angeordneten Durchtrittsöffnung (12);
- einer Druckfeder (15), wobei die Druckfeder (15) in der Längsachse (2) zwischen dem ersten Element (3) und dem zweiten Element (8) angeordnet ist;
- einem Verbindungselement (17) wobei das Verbindungselement (17) in der Längsachse (2) in der Bohrung (5) des ersten Elements (3) ortsfest gehalten ist und durch die Durchtrittsöffnung (12) des zweiten Elements (8) in die Führungsöffnung (10) des zweiten Elements (8) ragend geführt ist und an der dem ersten Element (3) gegenüberliegenden Seite des zweiten Elements (8) einen grösseren Durchmesser (20) als die Durchtrittsöffnung (12) aufweist,
**dadurch gekennzeichnet, dass**
das erste Element (3) einen rohrförmigen Ansatz (6) aufweist welcher in der Längsrichtung (2) teilweise über die Druckfeder (15) greifend angeordnet ist und dass das zweite Element (8) eine über die Druckfeder (15) und den Ansatz (6) des ersten Elements (3) greifende Hülse (14) aufweist.

2. Federelement (1) nach Anspruch 1, **dadurch gekennzeichnet, dass** zwischen der Hülse (14) und dem Ansatz (6) eine Dichtung (29) vorgesehen ist.

3. Federelement (1) nach Anspruch 2, **dadurch gekennzeichnet, dass** die Dichtung (29) in einer Nut (28) gehalten ist, wobei die Nut (28) in der Hülse (14) oder dem Ansatz (6) vorgesehen ist.

4. Federelement (1) nach Anspruch 2 oder 3, **dadurch gekennzeichnet, dass** die Dichtung (29) durch Kleben an der Hülse (14) oder am Ansatz (6) befestigt ist.

5. Federelement (1) nach mindestens einem der Ansprüche 2 bis 4, **dadurch gekennzeichnet, dass** die Dichtung (29) aus Filz oder Gummi gefertigt ist.

6. Federelement (1) nach mindestens einem der vorangehenden Ansprüche, **dadurch gekennzeichnet, dass** die Öffnungsweite (11) zumindest dem 1, 4-fachen eines Durchmessers (13) der Durchtrittsöffnung (12) entspricht.

7. Federelement (1) nach mindestens einem der vorangehenden Ansprüche, **dadurch gekennzeichnet, dass** die Bohrung (5) im ersten Element (3) ein Innengewinde aufweist und das Verbindungselement (17) in das erste Element (3) eingeschraubt ist, wobei zur Sicherung der Verschraubung ein Stift oder eine Sicherungsmutter (24) oder eine Verklebung vorgesehen ist.

8. Federelement (1) nach mindestens einem der vorangehenden Ansprüche, **dadurch gekennzeichnet, dass** zur Führung des Verbindungselementes (17) in der Führungsöffnung (10) eine Führungshülse (21) eingesetzt ist.

9. Federelement (1) nach mindestens einem der vorangehenden Ansprüche, **dadurch gekennzeichnet, dass** das Verbindungselement (17) aus einem Verbindungsbolzen (18) und einer am Verbindungsbolzen (18) gehaltenen Führungsbüchse (19) gebildet ist, wobei der Verbindungsbolzen (18) an einem dem ersten Element (3) zugewandten Ende ein Aussengewinde zur Verbindung mit dem ersten Element (3) und an einem dem zweiten Element (8) zugewandten Ende ein Verbindungsmittel zur Verbindung mit der Führungsbüchse (19) aufweist.

10. Federelement (1) nach Anspruch 8, **dadurch gekennzeichnet, dass** das Verbindungselement (17) bestehend aus dem Verbindungsbolzen (18) und der Führungsbüchse (19) einstückig ausgebildet ist.

11. Federelement (1) nach einem der Ansprüche 8 bis 10, **dadurch gekennzeichnet, dass** das Verbindungselement (17) in der Längsachse (2) durch den Verbindungsbolzen (18) in der Führungsöffnung (12) des ersten Elements (3) und durch die Führungsbüchse (19) in der Führungshülse (21) des zweiten Elements (8) geführt ist.

12. Federelement (1) nach einem der Ansprüche Anspruch 8 bis 11, **dadurch gekennzeichnet, dass** eine Höhe (16) der Druckfeder (15) derart auf die Länge des Verbindungselements (17) abgestimmt ist, dass durch die Befestigung des Verbindungsbolzens (18) im ersten Element (3) und im zweiten Element (8) eine Vorspannung der Druckfeder (15) erreicht wird.

13. Federelement (1) nach mindestens einem der Ansprüche 8 bis 12, **dadurch gekennzeichnet, dass** die Öffnungsweite (13) in einem Bereich der Führungsbüchse (19) grösser ist als in einem Bereich der Durchtrittsöffnung (12) des zweiten Elements (8).

14. Kämmmaschine mit zumindest einem Federelement (1) nach einem der vorangehenden Ansprüche.
